# EUROPEAN PATENT APPLICATION

(11) **EP 2 952 432 A1**
(43) Date of publication of application: **09.12.2015**
(21) Application number: 15170403.8
(22) Date of filing: 03.06.2015
(51) Int. Cl.: B64D 9/00, B65G 43/02, B65G 13/06, B65G 23/00

(54) **TORQUE CONTROL CARGO LOADING SYSTEMS AND METHODS**

(30) Priority: 04.06.2014 US 201414295564
(71) Applicant: Goodrich Corporation, Charlotte, NC 28217-4578 (US)
(72) Inventor: Harms, Scott Paul, Ypsilanti, ND 58497 (US)
(74) Representative: Klunker . Schmitt-Nilson . Hirsch

(57) **Abstract**

Systems comprising an input device(135) configured to output a variable control signal, a controller (10) configured to receive the variable control signal and derive a torque command in accordance with the variable control signal, and a freight conveying device (30) comprising a motor (40) configured to receive the torque command and produce an output torque on a motor shaft in accordance with the torque command are disclosed. Also methods comprising receiving, at a controller, a variable control signal from an input device, deriving, by the controller, a torque command in accordance with the variable control signal, and driving, by the controller, a motor of a freight conveying device in accordance with the torque command are disclosed.

## Description

The present disclosure relates to cargo loading methods and systems.

Conventional aircraft cargo handling systems typically have bi-directional motors controlled in an on/off manner at fixed velocities. Accordingly, operators loading or unloading an aircraft using a conventional aircraft cargo handling system typically will jog containers using rapid movements of an input device between the on and off position to control the velocity of the cargo while accurately positioning the cargo. The rapid movement of input devices between the on and off position can increase the cycle count, increase transient loads, and increases the risk of cargo over-shoot by an operator.

Exemplary embodiments of the invention include systems comprising an input device configured to output a variable control signal, a controller configured to receive the variable control signal and derive a torque command in accordance with the variable control signal, and a freight conveying device comprising a motor configured to receive the torque command and produce an output torque on a motor shaft in accordance with the torque command.

Particular embodiments of the invention may include any of the following features, alone or in combination.

The variable control signal may vary over a fixed range. The motor may be a three phase alternating current induction motor. The torque command may servo a control input current to an inverter of the motor. The input device may comprise at least one of a potentiometer, linear variable differential transformer, a rotary variable differential transformer, or display configured to create a digital output. The freight conveying device may comprise a moving element having a velocity limit. The controller may comprise a proportional-integral ("PI") controller configured to receive a velocity of the moving element. The controller may adjust the torque command in accordance with the velocity limit and the velocity of the moving element. The controller may comprise at least one of a differential comparator, a proportional-integral-derivative controller, or a proportional-integral controller. The input device may be at least one of a joystick or a track ball. The variable control signal may comprise a range including a positive value and a negative value. In response to receiving the negative value, the controller may derive a negative torque command.

Exemplary embodiments of the invention further include a method comprising receiving, at a controller, a variable control signal from an input device, deriving, by the controller, a torque command in accordance with the variable control signal, and driving, by the controller, a motor of a freight conveying device in accordance with the torque command.

Particular embodiments of the invention may include any of the following features, alone or in combination.

The method may further comprise adjusting, by the controller, the torque command based upon a velocity limit of a moving element of the freight conveying device and a velocity of the moving element. The method may further comprise deriving, by the controller, a negative torque command in accordance with a negative variable control signal.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a cargo handling system, in accordance with various embodiments;
FIG. 1B illustrates a freight conveying device, in accordance with various embodiments;
FIG. 2 illustrates a cargo handling system in an aircraft, in accordance with various embodiments;
FIG. 3 illustrates a method, in accordance with various embodiments;
FIG. 4 illustrates a method of adjusting a torque command based on a velocity limit, in accordance with various embodiments; and
FIG. 5 illustrates a method of deriving a negative torque command, in accordance with various embodiments.

The detailed description of exemplary embodiments herein makes reference to the accompanying drawings, which show exemplary embodiments by way of illustration and their best mode. While these exemplary embodiments are described in sufficient detail to enable those skilled in the art to practice the disclosure, it should be understood that other embodiments may be realized and that logical, electrical, and mechanical changes may be made without departing from the spirit and scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to "without contact" (or similar phrases) may also include reduced contact or minimal contact.

As used herein, "aft" refers to the direction associated with the tail (e.g., the back end) of an aircraft, or generally, to the direction of exhaust of a gas turbine. As used herein, "forward" refers to the direction associated with the nose (e.g., the front end) of an aircraft, or generally, to the direction of flight or motion.

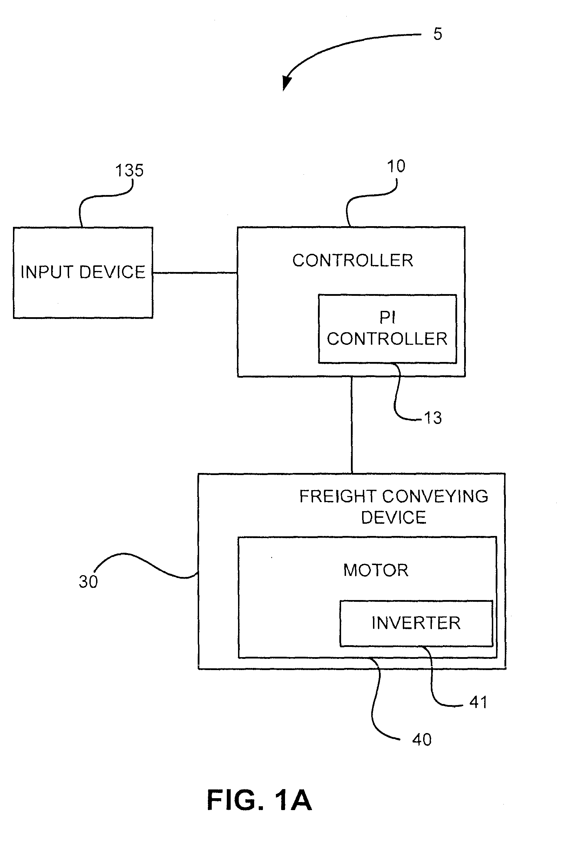

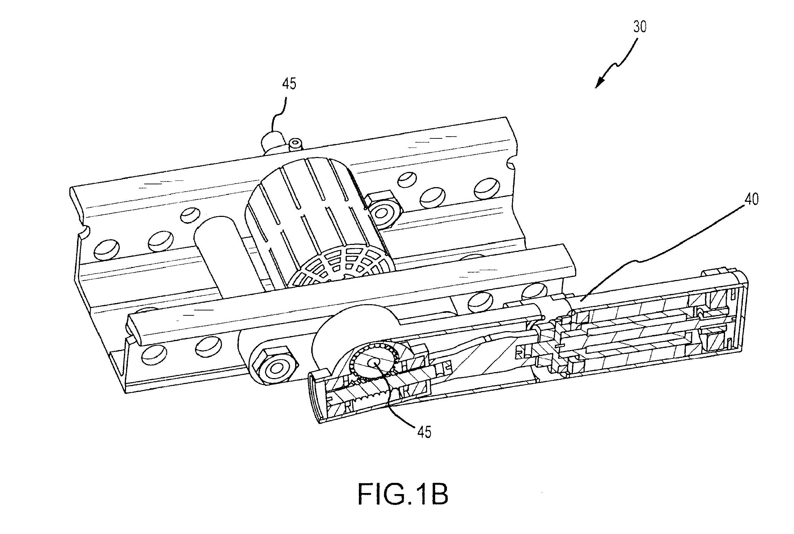

With temporary reference to FIG. 1A, FIG. 1A illustrates cargo handling system 5 in accordance with various embodiments. In various embodiments, cargo handling system 5 may comprise an input device 135 configured to output a variable control signal. Cargo handling system 5 may also comprise a controller 10. According to various embodiments, the controller 10 may be configured to receive the variable control signal and derive a torque command in accordance with the variable control signal. In various embodiments, cargo handling system 5 may also comprise a freight conveying device 30 comprising a motor 40 configured to receive the torque command and produce an output torque. For example, with temporary reference to FIG. 1B, FIG 1B illustrates freight conveying device 30 comprising a motor 40 configured to receive the torque command and produce an output torque on a motor shaft 45 in accordance with the torque command.

According to various embodiments, the variable control signal may vary over a fixed range. Accordingly, the input device 135 configured to output a variable control signal is not particularly limited. For example, the input device 135 may comprise at least one of a potentiometer, linear variable differential transformer, or a rotary variable differential transformer. The input device 135 may thus servo a control input current and/or a varying output digital signal. Thus, according to various embodiments, unlike conventional closed motor control loops which have a fixed velocity and binary control inputs, input device 135 may allow for torque control in accordance with the variable control signal received by controller 10 from input device 135.

According to various embodiments, the input device 135 may comprise a display configured to receive input commands from a graphical user interface. For example, input device 135 may comprise a touch screen that is configured to receive input commands. In various embodiments, input device 135 may comprise a digital display that displays a graphical user interface configured to receive input from a mouse, track pad, track wheel, track ball and/or touch screen. In various embodiments, the input device 135 may be configured to create a digital output. In various embodiments, the input device 135 may take the form of an application that may be used on a portable device, such as a cell phone, smart phone, tablet, personal digital assistant, laptop computer, or desktop computer. For example, in various embodiments, input device 135 may comprise a tablet computer running an operating system such as iOS, Android, Windows RT and/or Windows 8, among others.

Thus, in various embodiments, the torque command may be based on the variable control signal. For example, in various embodiments, the torque command may be normalized to a rating of the motor 40. For example, in various embodiments, the variable control signal may comprise a signal in a range (e.g., from 0 to 1). The variable control signal may be associated with the relative displacement of the input device from a resting state. For example, a joystick's proportional displacement from a resting position may be expressed as a value from 0 to 1 that represents the range of no displacement from a resting position to a maximum displacement from a resting position. In various embodiments, a variable control signal may servo a control input current in a given range.

In various embodiments, the range of the variable control signal may map to a range of torque commands. A torque command may, for example, servo a control input current to an inverter 41 of the motor 40. For example, if the input device 135 were to output a variable control signal of 0.5 within a range of 0 to 1, controller 10 may map the variable control signal to a predetermined torque command, such as 50% a maximum control input current to the motor 40. The relationship between the variable control signal and the torque command to which it maps may be linear and/or a step function and/or a linear function that changes slope during the range of variable control signals.

Furthermore, in various embodiments, the control signal is not particularly limited. For example, in various embodiments, the control signal may be an analog control signal, a digital control signal, or a combination of a digital and an analog control signal. According to various embodiments, the control signal may comprise a filter. For example, in various embodiments, the range of potential inputs may be filtered to exclude potential false positives.

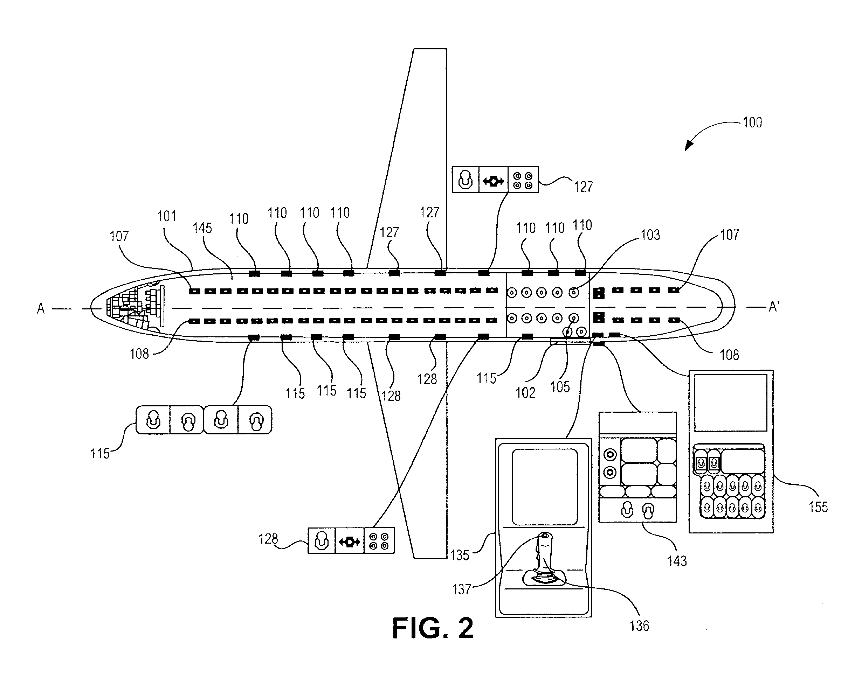

According to various embodiments, the controller 10 is not particularly limited. For example, in various embodiments, the controller 10 may comprise at least one of a joystick 136 (shown in FIG. 2) or a track ball. According to various embodiments, controller 10 may comprise a control loop feedback mechanism. In various embodiments, the controller 10 may adjust the torque command in accordance with a velocity limit and a velocity of a moving element (e.g., a motor shaft 45, as shown in FIG. 1 B). According to various embodiments, the controller 10 may comprise at least one of a differential comparator, a proportional-integral-derivative controller, or a proportional-integral ("PI") controller. Thus, in various embodiments, the controller 10 may comprise a PI controller 13 configured to receive a velocity of a moving element of a cargo system, for example, as shown in FIG. 1A. According to various embodiments, the PI controller 13 may reduce the torque command once a maximum velocity is reached without regard to the variable control signal. In various embodiments, once the velocity decreases below the maximum velocity, PI controller 13 may then apply the appropriate torque command in accordance with the variable control signal. The PI controller 13 may repeat the process of adjusting the torque command in response to the achievement of the maximum velocity on a continuous basis. Thus, in various embodiments, cargo handling system 5 may facilitate torque control while also preventing velocity beyond the maximum velocity.

Furthermore, in various embodiments, the torque command is not particularly limited. For example, in various embodiments, the torque command may servo (e.g., via an inverter 41) a control input current to motor 40. In various embodiments, the freight conveying device 30 may comprise a moving element having a velocity limit. For example, according to various embodiments, freight conveying device 30 may limit the velocity of motor shaft 45.

Moreover, in various embodiments, the motor 40 is not particularly limited. In various embodiments, motor 40 may comprise at least one of an induction motor or a permanent magnet motor. For example, in various embodiments, the motor 40 may be a three phase alternating current induction motor.

Furthermore, in various embodiments the variable control signal may comprise a range including a positive value and a negative value. Thus, in various embodiments, in response to receiving the negative value, the controller may derive a negative torque command.

With reference to FIG. 2, FIG. 2 illustrates an aircraft cargo handling system 100 of an aircraft 101. In various embodiments, aircraft 101 may comprise an opening 102 through which cargo may be moved into the cargo deck 145 of aircraft 101. According to various embodiments, cargo deck 145 may comprise a plurality of freight conveying devices 107 and 108 and swivel freight conveying devices 103 and 105. In various embodiments, swivel freight conveying devices 103 and 105 may be configured to rotate and, thus, aid in the loading and/or unloading of aircraft 101 through opening 102. According to various embodiments, freight conveying devices 107 and 108 may be configured to transport cargo forward and aft within aircraft 101 (e.g., along axis A-A').

In various embodiments, swivel freight conveying devices 105 may be controlled by input device 135 with the aid of retract panel 155. In various embodiments, input device 135 may comprise a joystick 136. In various embodiments, input device 135 may comprise a dead-man's switch 137. As used herein, the term "dead-man's switch" may include any device which has the ability to stop a variable control signal if an operator loses control of input device 135. According to various embodiments, release of the dead-man's switch 137 may cause controller 10 to cause motor 40 to perform a hard stop (e.g., cause a zero velocity state of freight conveying device 30). In various embodiments, controller 10 may be configured to cause a hard stop with the aid of mechanical brakes. Thus, in various embodiments, the dead-man's switch may aid in preventing unintentional movement of cargo (e.g., if input device 135 is accidently activated).

According to various embodiments, aircraft 101 may also comprise local control panels 110 and outside control panel 143 to help direct communication from input device 135 to freight conveying devices 107, which may be placed at various forward and aft positions of aircraft 101 (e.g., along the A-A' axis). Moreover, in various embodiments, extended local control panels 127 may aid in directing communication from input device 135 to freight conveying devices 107. In various embodiments, aircraft 101 may also comprise swivel freight conveying devices 103, which may be controlled by input device 135 with the aid of retract panel 155.

In various embodiments, aircraft 101 may also comprise local control panels 115 and outside control panel 143 to help direct communication from input device 135 to the freight conveying devices 108. Moreover, in various embodiments, extended local control panels 128 may aid in directing communication from input device 135 to freight conveying devices 108. In various embodiments, aircraft 101 may also comprise swivel freight conveying devices 105, which may be controlled by input device 135 with the aid of retract panel 155.

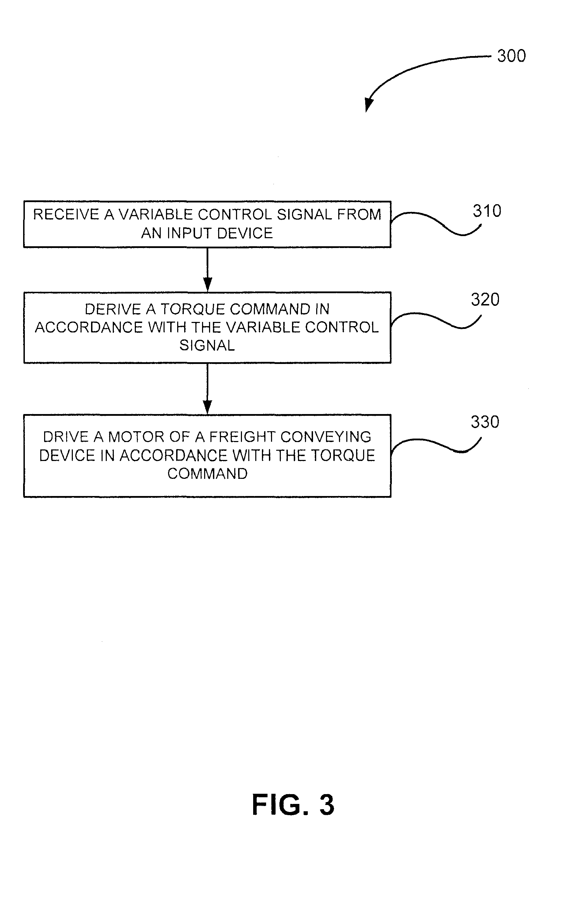

With reference to FIG. 3, method 300 for moving cargo is illustrated according to various embodiments. With additional reference to FIG. 1A, in various embodiments, method 300 may comprise receiving, at a controller 10, a variable control signal from an input device (step 310). According to various embodiments, method 300 may also comprise deriving, by the controller 10, a torque command in accordance with the variable control signal (step 320). In accordance with various embodiments, method 300 may comprise driving, by the controller 10, a motor 40 of a freight conveying device 30 in accordance with the torque command (step 330). Thus, in various embodiments, by driving a motor 40 of a freight conveying device 30 with the torque command derived from the variable control signal, finer control by an operator when loading and/or unloading (e.g., aircraft 101) may be facilitated. Without being limited to any theory, it is believed that, according to various embodiments, a system and/or method including driving a motor 40 of a freight conveying device 30 with the torque command derived from the variable control signal, may be more intuitive to operate and, thus, may reduce the skill requirements currently imposed on operators with conventional systems.

For example, in various embodiments, finer control may help aid clearance verification between cargo and an aircraft structure. Additionally, finer control may help aid in the alignment of cargo with a restraint subsystem. Moreover, according to various embodiments, driving a motor 40 of a freight conveying device 30 with the torque command derived from the variable control signal may allow for improved system safety (e.g., reducing the potential of overshot).

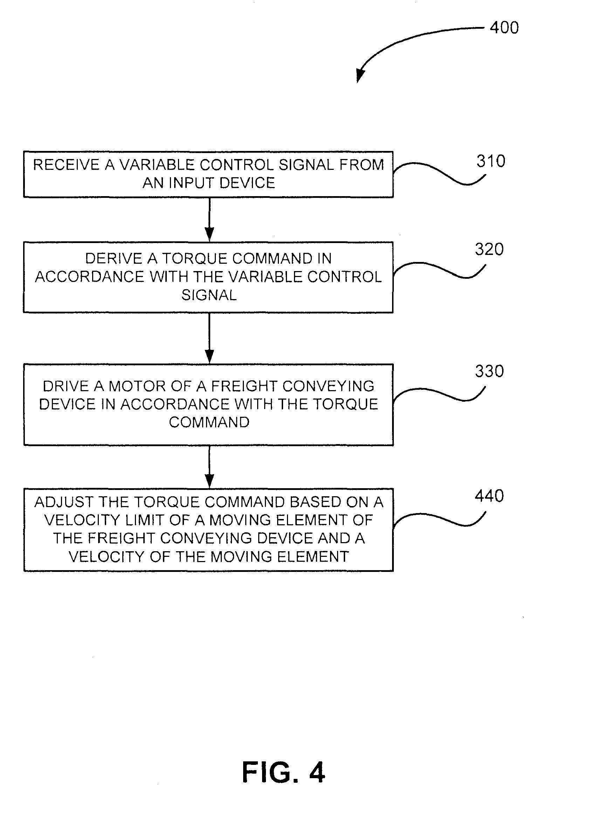

With reference to FIG. 4, method 400 is illustrated in accordance with various embodiments. With additional reference to FIGs. 1A and 1B, in various embodiments, method 400 may comprise receiving, at a controller 10, a variable control signal from an input device 135 (step 310). According to various embodiments, method 400 may also comprise deriving, by the controller 10, a torque command in accordance with the variable control signal (step 320). In accordance with various embodiments, method 400 may comprise driving, by the controller, a motor 40 of a freight conveying device 30 in accordance with the torque command (step 330). According to various embodiments, method 400 may comprise adjusting, by the controller 10, the torque command based upon a velocity limit of a moving element (e.g., motor shaft 45) of the freight conveying device 30 and a velocity of the moving element (step 440). For example, in various embodiments, the controller 10 may comprise a PI controller 13, as shown in FIG. 1A. According to various embodiments, the PI controller 13 may reduce the torque command once a maximum velocity is reached without regard to the variable control signal. In various embodiments, once the velocity decreases below the maximum velocity, PI controller 13 may then apply the appropriate torque command in accordance with the variable control signal. Thus, method 400 may facilitate swift transportation of cargo while keeping the velocity of the cargo within predetermined velocities (e.g., due to various regulations or best practices).

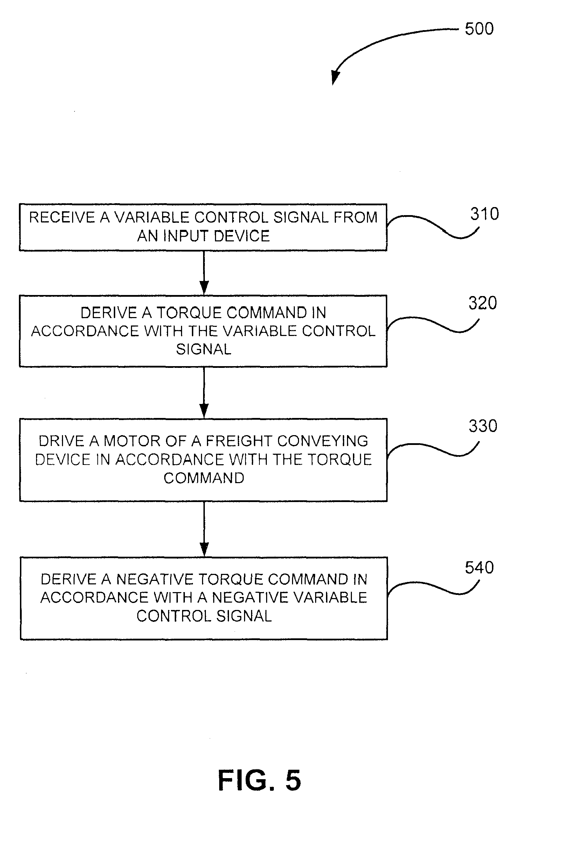

With reference to FIG. 5, method 500 is illustrated according to various embodiments. With additional reference to FIGs. 1A and 1B, in various embodiments, method 500 may comprise receiving, at a controller 10, a variable control signal from an input device 135 (step 310). According to various embodiments, method 500 may also comprise deriving, by the controller 10, a torque command in accordance with the variable control signal (step 320). In accordance with various embodiments, method 500 may comprise driving, by the controller 10, a motor 40 of a freight conveying device 30 in accordance with the torque command (step 330). According to various embodiments, method 500 may comprise deriving, by the controller 10, a negative torque command in accordance with a negative variable control signal (step 540).

In various embodiments, deriving, by the controller 10, a negative torque command in accordance with a negative variable control signal may aid in stopping the cargo and allow for more precise operator control. According to various embodiments, this may help to prevent repeated actuation of mechanical brakes and, thus, may prolong the life of various systems.

Also, in various embodiments, deriving, by the controller 10, a negative torque command in accordance with a negative variable control signal may comprise accelerating motor shaft 45 of freight conveying device 30 in an opposite direction from the torque command in accordance with the variable control signal. Thus, in various embodiments, method 500 may be bi-directional (e.g., allow for the movement of cargo forward and aft within an aircraft). According to various embodiments, this may allow for more precise operator control when loading and unloading cargo.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosed embodiments. The scope of the claimed embodiments is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. § 112(f), unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A system (5) comprising:
an input device (135) configured to output a variable control signal;
a controller (10) configured to receive the variable control signal and derive a torque command in accordance with the variable control signal; and
a freight conveying device (30) comprising a motor (40) configured to receive the torque command and produce an output torque on a motor shaft (45) in accordance with the torque command.

2. The system (5) of claim 1, wherein the variable control signal varies over a fixed range.

3. The system (5) of claim 1 or 2, wherein the motor is a three phase alternating current induction motor.

4. The system (5) of any of the preceding claims, wherein the torque command servos a control input current to an inverter (41) of the motor.

5. The system (5) of any of the preceding claims, wherein the input device (135) comprises at least one of a potentiometer, linear variable differential transformer, a rotary variable differential transformer, or display configured to create a digital output.

6. The system (5) of any of the preceding claims, wherein the freight conveying device (30) comprises a moving element having a velocity limit.

7. The system (5) of claim 6, wherein the controller (10) comprises a proportional-integral ("PI") controller (13) configured to receive a velocity of the moving element.

8. The system (5) of claim 7, wherein the controller (10) adjusts the torque command in accordance with the velocity limit and the velocity of the moving element.

9. The system (5) of any of the preceding claims, wherein the controller (10) comprises at least one of a differential comparator, a proportional-integral-derivative controller, or a proportional-integral controller.

10. The system (5) of any of the preceding claims, wherein the input device (135) is at least one of a joystick or a track ball.

11. The system (5) of any of the preceding claims, wherein the variable control signal comprises a range including a positive value and a negative value.

12. The system (5) of claim 11, wherein, in response to receiving the negative value, the controller derives a negative torque command.

13. A method comprising:
receiving, at a controller (10), a variable control signal from an input device (135);
deriving, by the controller (10), a torque command in accordance with the variable control signal; and
driving, by the controller (10), a motor (40) of a freight conveying device (30) in accordance with the torque command.

14. The method of claim 13, further comprising adjusting, by the controller (10), the torque command based upon a velocity limit of a moving element of the freight conveying device (30) and a velocity of the moving element.

15. The method of claim 13 or 14, further comprising deriving, by the controller (10), a negative torque command in accordance with a negative variable control signal.
